# EUROPEAN PATENT APPLICATION

(11) **EP 1 089 092 A1**
(43) Date of publication of application: **04.04.2001**
(21) Application number: 99203211.0
(22) Date of filing: 01.10.1999
(51) Int. Cl.: G01V 1/38

(54) **Method and apparatus for measuring physical parameters from the phase and amplitude histories of an acoustic signal**

(71) Applicant: Baggermaatschappij Boskalis B.V., 3350 AA Papendrecht (NL)
(72) Inventor: Roosnek, Nico, 2592 AC Den Haag (NL)
(74) Representative: Ferguson, Alexander

(57) **Abstract**

Method and apparatus for extracting at least one physical parameter from an acoustic signal. The signal received by a first transducer, which is located below a water surface, is converted into an electric signal. The electric signal is then digitised and transformed to a complex digital signal. From the phase history and the amplitude history of the complex digital signal the physical parameter or parameters are determined.

## Description

The invention relates to a method for extracting at least one physical parameter from at least one first acoustic signal, where the signal is received by at least one first transducer which is located below a water surface, the signal is converted into an electric signal, and the electric signal is applied to a signal processor, in which signal processor the electric signal is converted by an analog-to-digital converter into at least one first digital signal.

The invention further relates to an apparatus for extracting at least one physical parameter from an acoustic signal, comprising at least one receiver means which is located below a water surface for converting the signal into an electric signal, a signal processor and a digital signal 1 processor, connected to the receiver means and provided with an analog-to-digital converter.

In general, such a method and apparatus are known. These methods and apparatus have the disadvantage, however, that for a low signal-to-noise ratio it is difficult, if not impossible, to derive information from a digital signal. It has been tried to overcome these problems by using an analog phase network. This method does not work very well when the bandwidth of the signal is large. Thus, the use of an analog phase network has the disadvantage that it can only be used on electric signals with a small frequency bandwidth.

The method and the apparatus according to the invention obviate these drawbacks. The method of the known type mentioned in the opening paragraph is characterised, according to an aspect of the invention, in that the digital signal is transformed into a complex digital signal, and physical parameters are determined on the basis of a phase history and an amplitude history of the complex digital signal.

The apparatus of the known type mentioned in the second paragraph according to the invention is characterised in that the digital signal processor is provided with a means for deriving a first complex digital signal, a converter means connected to the means for deriving a first complex digital signal for converting the complex digital signal into an amplitude signal and a phase signal, an amplitude memory connected to the converter means for storing the amplitude signal and a phase memory means for storing the phase signal.

The invention provides a method and an apparatus which is capable of extracting physical parameters from a signal, having a low signal-to-noise ratio. In fact, the method and apparatus are capable of extracting physical parameters from signals having a signal-to-noise ratio of 20 dB, and even lower than 0dB. Furthermore, the method and apparatus are capable of doing so with signals having a broad frequency bandwidth. In general this means that the bandwidth is at least 25% of the mean frequency, but depends also on the required accuracy in the phase calculation.

The signal can be converted into a complex digital signal using mathematical methods, which are, as such, well known in the art. A preferred method is a Hilbert filter, although other procedures can be used as well. The advantage of using a Hilbert filter is that it is very fast when implemented on a computer and needs a relative small amount of memory. An other mathematical method which is, as such, well known in the art and which can be used for the same purpose is a Fast Fourier Transform (FFT). The signals are transformed using a real FFT and transformed back using a complex FFT.

It should be noted that the Hilbert filter is known per se from, for example, "Theory and application of digital signal processing, L.R. Rabiner and B. Gold, Prentice-Hall, Inc, 1975, page. 70-73.

A further favourable embodiment of the method according to the invention, which can be applied in situations where the signal-to-noise ratio of a received signal is relatively small, is characterised in that the digital signal processor transforms the complex digital signal into a digital amplitude signal and a corresponding digital phase signal. According to the underlying inventive principle, it is essential that as much information available in the signal as possible be used while trying to determine a physical parameter from it.

According to a further aspect of the invention the method may be used for an even smaller signal-to-noise ratio if the history of the amplitude of the received signal is taken into account. This embodiment of the method is accordingly characterised in that the digital signal processor comprises an amplitude memory, in which a filtered digital amplitude signal, as obtained from previous measurements, is stored and that every time a new filtered digital amplitude signal is determined from the digital amplitude signal and from the stored filtered digital amplitude signal.

According to a further aspect of the invention the method may be used with an even smaller signal-to-noise ratio if the history of the phase of the received signal is taken into account. This embodiment is characterised in that the digital signal processor comprises a frequency memory, in which an estimated average frequency of the signal, obtained from previously obtained digital phase signals, is stored.

Subsequently, the physical parameters are estimated, where the weighted least square method is used to estimate a phase history from the estimated average frequency and the from the digital phase signal. In fact, a straight line is fitted to the series of phases of which the 2Π ambiguity is removed by using the previous estimate frequency, with weighting factors as determined by the filtered digital amplitude signals. The history is also used in the fitting procedure depending on the time variance of the mean frequency. By using a least square method a number, the so-called χ² (chi square) is obtained, which is the residue of the least square procedure and which, apart from the system error, is a measure for the statistical error or noise. The physical parameter may subsequently be determined on the basis of a zero crossing in the estimated phase history that is closest to a maximum in the filtered digital amplitude signal and a new estimated frequency. Subsequently the error in the estimated mean frequency and the zero crossing error are derived quantities from the χ² error.

A favourable embodiment of the inventive method, is characterised in that the digital signal processor comprises a crosstalk memory, in which a first complex digital signal is stored, representing crosstalk signals received by other receiving means and calculated using the characteristics of the specific crosstalk signals, and that the first complex digital signal is subtracted from a complex digital signal before the complex digital signal is further processed. It is also possible to subtract the crosstalk signal in the time-domain. This can be done using analog circuitry, i.e. before the analog-to-digital converter, or using the digital signals.

The transducer according to the invention is capable of converting signals into electric signals. The signals are acoustic signals, which are to be converted into electric signals. Acoustic signals suitable to be used in the invention can vary in a very broad range. It is possible to use 100 Hz signals, but also 12 kHz,up to 100 kHz and even MHz range signals can be applied. Preferably, the method of the current invention is used for acoustic signals relating to sonar and/or seismic applications. In case of a transmitted signal from a second transducer, the received signal is due to a well defined transmitted pulse such as e.g. a Dirac-pulse or a chirp pulse modified by the signal transfer functions of the electrical circuit, the transducer and eventually in case of the parametric or non-linear effect of the water the result of conversion of the primary/high frequency signal into the secondary/low frequency signal. Any signal may be used for the technique. In case of correlation of the receiving signals from two transducers located at different positions the signal due to correlation is symmetric and can be used by this technique. The length of procedure is reciprocal with the bandwidth.

The method and apparatus according to the present invention can also use, or be provided with, at least one second transducer. This second transducer is applied in order to send an acoustic signal, which can be received by one or more first transducers. The signal sent by the transducer preferably is a well-defined pulse, such as a chirp or any other short-duration pulse. The signal can also be a pulse having a well-known envelope or be a short pulse on a carrier wave of a longer frequency.

The method and apparatus according to the present invention are specifically suited for application in the field of underwater detection using acoustic signals. The signal-to-noise ratio of these signals often can be very low, resulting in large errors in determined physical parameters, if these parameters can be determined altogether.

In this field, the method and apparatus according to the current invention can, with considerable success, be used to detect stationary objects like rocks and large stones in further soft sediment layers or to detect different sediment layers and the thickness thereof. It can furthermore successfully be applied in order to measure the thickness of layers used to cover pipes or cables below the water surface, i.e. a layer of rubble, or to determine how deep below the seabed the pipes or cables are put. Up until now, this could only be done using divers and submarines to inspect whether the entire pipe or cable has been covered by a layer of sand and/or rock. Also, remote operated vehicles equipped with magnetometers can be applied. In general, the method is specifically suited for detecting transitions in acoustic impedance of the layers of a bed below a water surface, i.e. under the sea or river or lake.

In order to control or measure the thickness of rubble layers covering a pipe or cable under water, a ship is equipped with means for detecting the presence of a pipe or cable, like a parametric echo sounder, and an apparatus according to the present invention. Using for example the parametric echo sounder, the ship is made to follow the pipe or cable, and remains as close as possible on top of the pipe or cable. Using an apparatus according to the present invention, a bundle of acoustic pulses with a small footprint, i.e. with a small beam width and virtually without site lob, is swept over the seabed. Every transition of acoustic impedance reflects some energy of the acoustic pulse back to the ship. There, the echo of the low frequency or secondary frequency signal of the parametric echo sounder by the impedance difference is detected by one of the first transducers, converted into an electric signal and further processed using the method of the current invention. It is also possible to use the high frequency signal and/or the low frequency signal of the parametric echo sounder reflected by the seabed or riverbed and process the received signals using the method of the current invention.

The ship or vehicle equipped with an apparatus according to the present invention preferably is equipped with means for propagation or movement. Preferably it is a dredger or a vessel used in dredging activities, a vessel for laying pipelines or cables or a vessel used in such activities.

Specifically, the parametric echo sounder consists of one transducer by which a high power frequency signal is sent out into the water, which signal is called the primary signal. The frequency components of the signal are in the order of 100 kHz, and the signal has a beam width of 3 to 4 degrees. Due to the non-linear effects of propegation of acoustic pulses in water, harmonics and subharmonics of the primary signal are generated of which the subharmonic signals, so-called secondary signals, are used for the detection and tracking by using the method of the current invention. The secondary signal has the same characteristics as an end-fire aerial, e.g. a beam pattern consisting of only one lob without side lobs. The frequency components of the secondary signal are in the range of 0.1 to 15 kHz for this application. The receiving transducer(s) for the echo of the secondary signal and one for the echo of the primary signal may be combined into one transducer.

The low frequency or secondary signal receiving transducers may consist of an array of elements introducing directivity for that transducer, reducing the environmental noise.

Tracking of for example a pipe or cable below a seabed or riverbed can be accomplished mainly in two ways:
1. The direction of the primary beam is changed, i.e. the bundle is swept over the seabed.
2. At least one extra receiving transducer can be used at a distance from the first one, thus resulting in a large base, or at least two transducers having a large base can be used.
The latter method will enhance the pipe tracking capabilities of the system. Using this second method, the direction of the bundle is changed in order to keep directed to the pipe or cable. This is done using directional information from the two transducers. The two methods can also be combined if so desired.

When combining the transmitting and receiving transducers into one element, extra circuitry has to be introduced to separate the transmitting and receiving functions. Also, extra analog and/or digital processing has to be introduced in the receiver to separate the primary or high frequency signal and the secondary or low frequency signal. Such circuitry is well known to the man skilled in the art.

The invention will now be further explained with reference to the following figures, in which:
- Fig. 1: shows a flow chart of the method and the apparatus according to the invention;
- Fig. 2A: represents a possible wave shape of a received signal;
- Fig. 2B: represents a frequency spectrum of this wave shape;
- Fig. 3: represents a block diagram of a possible embodiment of an apparatus for measuring physical parameters of objects and surfaces located below a water surface;
- Fig. 4.: represents a vessel equipped with an apparatus according to the present invention.

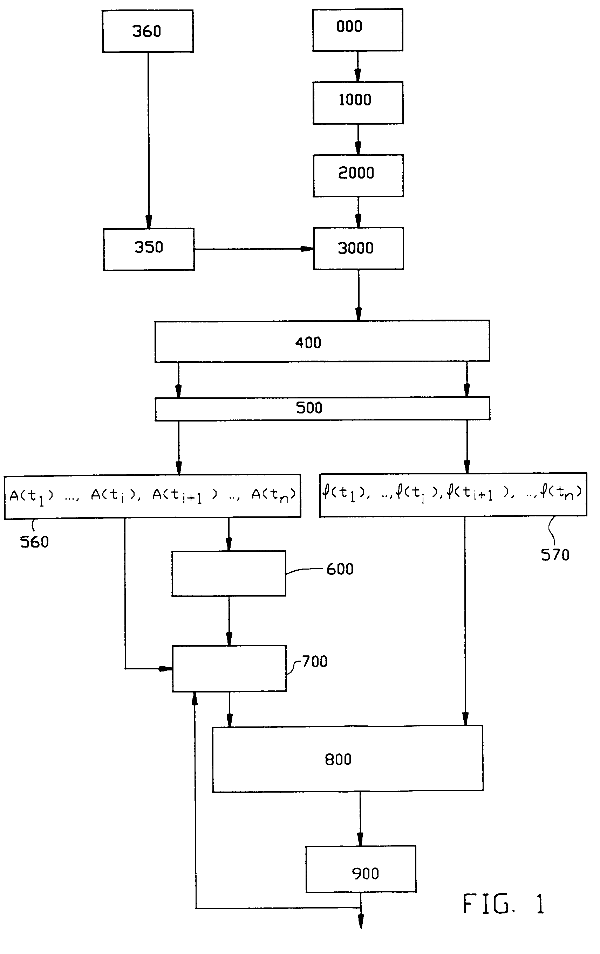

Fig. 1 shows a generalised, possible flow chart of the method and apparatus. A signal is detected by a first transducer 000 and converted into an electric signal. The electric signal is further processed by circuitry 1000. The circuitry 1000 is connected to an analog-to-digital converter (ADC) 2000. The ADC 2000 converts the electric signal into a digital signal. If crosstalk or background noise removal circuitry is added, the signal is fed to a subtractor 3000 to subtract this crosstalk or background noise 360 in crosstalk memory 350 from the digital signal. The digital signal without crosstalk is subsequently fed to a digital filter 400, which converts the digital signal into a complex digital signal. This filter can be a combination of Fourier transforms or Fast Fourier Transforms (FFT). Preferably, a Hilbert filter is used. The Hilbert filter converts a flow of single digital measurements into a flow of complex digital measurements with half the sample rate, in a manner known in the art. The complex digital signal is subsequently supplied to converter 500. The converter converts the complex digital signal to a digital amplitude signal and a digital phase signal.This conversion as such is well known in the art.

If the complex digital signal is for example represented by a series:
s {t₁, ... , tₙ} then converter 500 produces from this the digital amplitude signal and the digital phase signal:
A(t₁, ... , tₙ) and ϕ(t₁, ... , tₙ)

The digital amplitude is stored in amplitude memory 560; the digital phase is stored in phase memory 570. The digital amplitude signal is supplied to a procedure for averaging the amplitude 600 in such a way that the history of the amplitude is taken into account, using for example a socalled Infinite Impuls Response (IIR) filter like an RC filter, or other means known in the art. The amplitude signal and the history averaged amplitude signal and peak position of a previous peak are supplied to peak labelling procedure 700. In this peak labelling procedure a rough estimate of the peak position is estimated. The linearised phase data is unwrapped in order to remove the 2π ambiguity, and using a linear least squares method 800 a straight line is fitted through this phase data. In this least squares fit, the arrival time of the pulse is determined from the abscissa, the average frequency of the signal is calculated from the tangent, and the noise is determined from χ² (chi-square). This average frequency and arrival time of the detected pulse are calculated in 900.

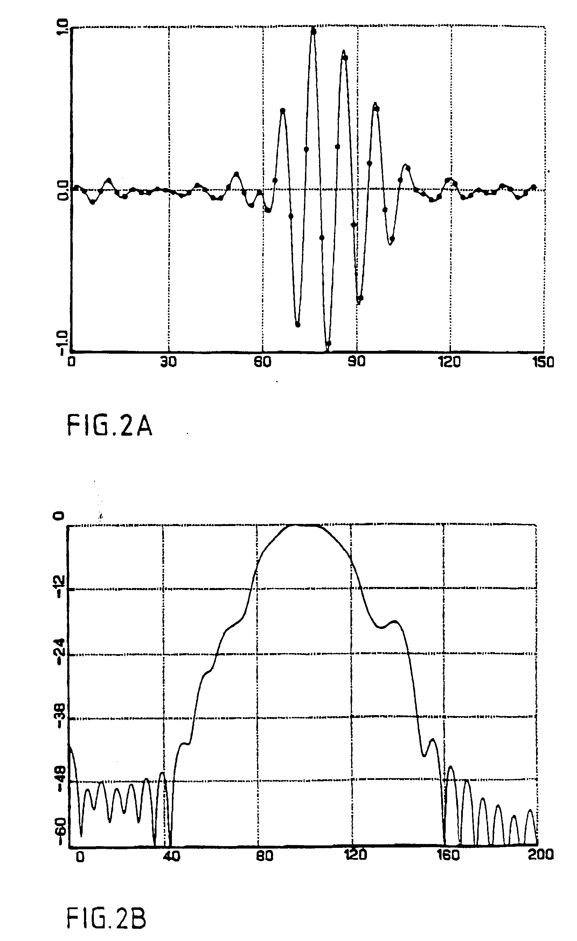

Fig. 2A shows a possible wave shape of a received signal in the time domain. Usually a very short, unipolar electric signal is applied to the transmitting second transducer, comparable to a Dirac-pulse in response to which the transducer outputs a short, damped vibration. The frequency of the vibration is thereby determined by the resonance frequency of the transducer while the lenghth of the signal is substantially determined by the internal damping of the transducer and the frequency dependant damping caused by the medium in which the signal is transmitted, for example water, the object or sediment layers, in case the method of the invention is used for measurements below a water surface. Instead of a Dirac-pulse, the non-linearity of the water can be used to generate a very wide frequency banded acoustic pulse. The receiving transducer is also set responding; for example vibrating upon the reception of one or more reflected signals, and then outputs an electric signal as shown. In Fig. 2A the signal-to-noise ratio is about 20 dB; consequently it is a strong signal. In an apparatus according to the invention, signals with a far smaller signal-to-noise ratio may be processed. In Fig. 2A the horizontal scale is in microseconds, the measured values have been sampled with a frequency of 400 Kc/s. The vertical scale only shows a ratio with respect to the maximum signal.

Fig. 2B shows the spectrum of the received signal as shown in Fig. 2A in the frequency domain. The horizontal scale is in Kc/s, the vertical scale in dB. It clearly shows that the signal is a wide band signal.

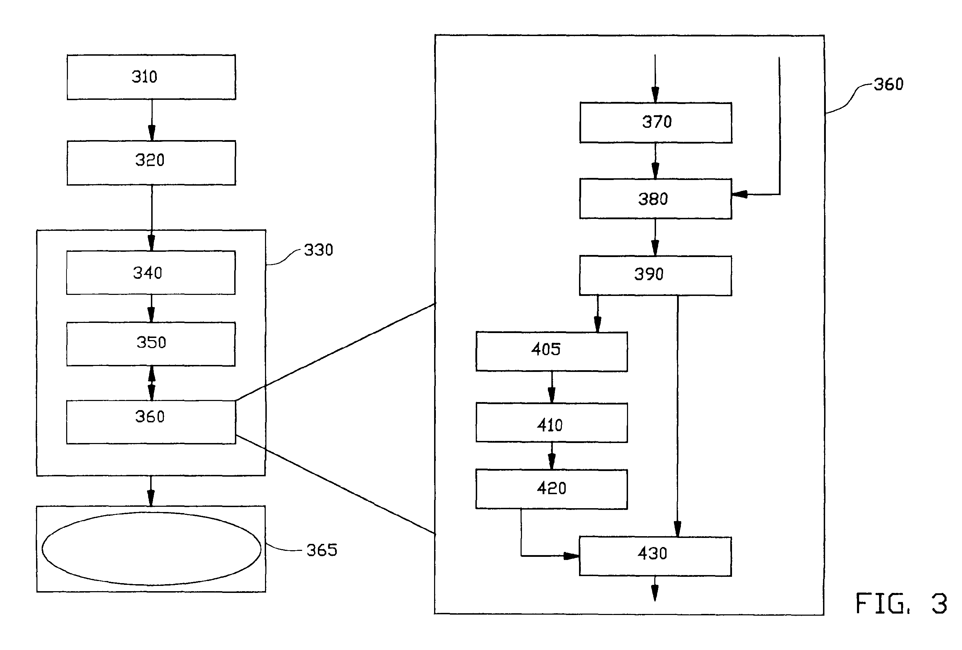

Fig. 3 represents a block diagram of a possible embodiment of apparatus according to the present invention. As shown, the transducer 310 is connected to receiver means 320, comprising a preamplifier and a bandpass filter. The receiver means 320 is connected to a computer 330 comprising an analog-to-digital converter 340, memory means 350 and software 360. The computer 330 is further connected to well known input, output and storage devices like for example a display 365. The digital signal is stored in the memory means 350 and led to the software 360 where it is processed using a Hilbert filter subroutine. The Hilbert filter converts a flow of single digital measurements into a flow of complex digital measurements with half the sample rate, in a manner known in the art. This data is also stored in the memory means 350.

The software will be further elucidated. The digital signals, representing the received electric signals, are directed to a Hilbert filter routine 370, supplied to a subtractor 380 in which, if desired, a crosstalk or background signal, which has reached the receiving transducer via the hull of the ship for example, or periodic noise from the engines of a ship, is removed from the complex digital signal. The crosstalk can also be subtracted in the time domain, or before the Hilbert-filter step.

Before the actual measurement of the physical parameter is started, crosstalk signals are determined and stored in a crosstalk memory 350. This is for example easily effected by measuring in a direction wherein no variation of the signal, due to the physical parameter to be measured, is present. It is also possible to determine the crosstalk signal by measuring a number of signals under different circumstances and by averaging the complex digital signals, in which averaging process a changing component in these complex digital signals disappears and the crosstalk signal is retained. Once the crosstalk signal is known, it may simply be subtracted from the complex digital signal in suctractor 380 for obtaining a substantially crosstalk free complex digital signal.

The crosstalk-free complex digital signal thus obtained is subsequently supplied to a converter 390, arranged for converting this signal to a digital amplitude signal and a digital phase signal, which conversion as such is well known in the art and described above.

The digital amplitude signal is supplied for further processing to an amplitude memory 405 in which a filtered digital amplitude signal, obtained from preceding measurements, is stored. The digital amplitude signal is supplied to an amplitude filter 410 together with a digital amplitude signal. Amplitude filter 410 determines a new filtered digital amplitude signal from α times the filtered digital amplitude signal and (1-α) times the digital amplitude signal, with α ∈ (0.6-0.95).

The new filtered amplitude signal and the maximum in the new filtered amplitude signal are then supplied to weighting means 420, which determines a weighting factor. The digital phase signal is processed by applying a weighted least square method 430. According to this method, a line is fitted through the successive unwrapped phases of the digital phase signal, in which process the new estimated average frequency determines the direction of the line and the new filtered amplitude signal supplies the weighting factors, because the phase information emanating from a small measured value is relatively unreliable. Finally a physical parameter within the signal is determined from the zero crossing of the estimated phase history that is nearest to the maximum of the new filtered amplitude signal.

If the signal-to-noise ratio becomes very small, the weighting means 420 could incidentally point to a faulty zero crossing in the estimated phase history, causing a step-like change in the physical parameter as determined. In order to prevent this, a filter is added. The value of the parameter as measured is supplied to this filter. This value is then compared with previous measured values. The measurements that show a step-like change are discarded, in an obvious manner, by not using them in the averaging process. This method and apparatus can also be used with two extra transducers at the port and at the starboard of the main transducer on a base enhancing the pipe tracking capabilities.

It is possible to improve the signal-to-noise ratio by arranging transmitter means 310 such that a relatively long, coded pulse is transmitted by the transmitting transducer, and by providing receiver means 320 with a correlator for the coded pulse. The correlation peak, as produced by the correlator, has substantially the same shape as the pulse shown in Fig. 2A, which implicates that the processing in fact can be used unchanged.

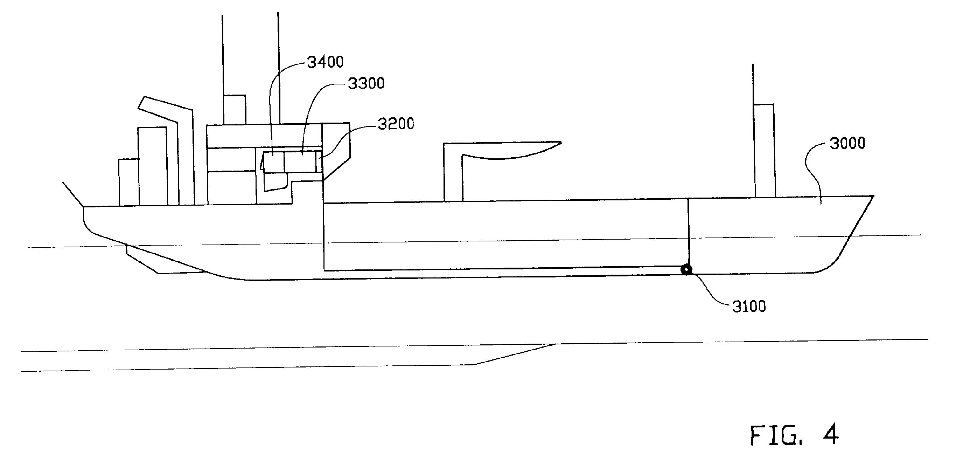

In figure 4 vessel 3000 is shown equipped with an apparatus according to the present invention. The vessel is equipped with one or more transducer(s) 3100. The transducer (s) is/are connected to an analog circuit 3200, a computer 3300, which can be connected to output devices, like display means 3400.

Another application of the method and apparatus described above is in the field of measurement of sound and tracking of moving sound sources above or below a water surface, like for example vehicles and aeroplanes. In this case the transducer comprises at least two microphones or hydrophones ('phones'). If more than two phones are used, it is advantageous if the phones are not placed in one line if using three phones, and not placed in one plane when using four phones. It is thus advantageous if the phone are placed in such a way that three phones define a plane or four or more phones define a space. The distances between the phones are such that the angle sensitivity suffices, taking the turbulence of the medium into account. In case of two phones one directional angle is obtained, in case of three phones two angles are obtained with an ambiguity in the sign of the angle perpendicular to, or outside the plane defined by the three phones. In case of four phones, the configuration is defined so that no phone is in the plane defined by the other phones. A logical choice is to place the phones on the vertices of a tetrahedron. Thus, the distances between the phones are the same. By combining these signals the horizontal angle and the vertical angle are obtained.

The phones convert the acoustic signals into electric signals, which, using cross correlation, are combined such, that complex correlation time signals are generated from the real signals. These correlated signals are averaged so that the averaged correlation signals are more wide frequency banded, lowering the ambiguity in the correlation signals. In case of three phones, the number of correlation signals and averaged signals are three, and in case of four phones the number of correlation signals are six. Detection and tracking motion analysis is applied on these sources via the procedures described above in order to obtain accurate time differences relating to the directional information of these sources. The parameters of the motion analysis are used for the enhancement of the correlation signals. In case of four phones the ambiguity is fully resolved by combining the time differences in the averaged correlation signals.

The acoustic noise energy from the moving or stationary sources is converted by the phones into electrical signals and further filtered/amplified by the pre-amplifier and converted by the analog to digital converter into series of numbers, called digital signals. By correlating these signals via a real Fast Fourier Transform (FFT) and transforming back with a complex FFT, the complex correlation signal is obtained, without using a Hilbert filter, with that reducing the sample frequency by a factor 2. However, a Hilbert filter can also be used. More generally, a digital filter is used to convolute the two signals and calculate the complex signal.

The correlation signal is averaged, reducing the intrinsic ambiguity for noise signals. The procedure is performed for all two input signal combinations. By analysing the averaged correlation signal(s), using the noisiness or variation in the signals as a measure, one or more peaks are obtained which are related to the sound sources. By using the method described above, very accurate time differences are obtained for these peaks.

Motion analysis predicts the places of the peaks in the correlation signals. By taking the motion into account, the source signal information is enhanced with regard to noise of other sources. The source information is analysed by the algorithm described above and thus very accurate time differences are obtained for these source signals.

By combining the time differences of the peaks in the correlation source signals, the three phones configuration gives both angles with a sign ambiguity for the vertical angle. For the four phones configuration the sign ambiguity is removed and the timing and angle errors are reduced.

By combining two configurations on a large base, the range is obtained from these measurements with an error, depending on the atmospheric conditions and even more so on the distance between the source and the phone configurations and its phone base.

As mentioned above, the method is specifically suited for signals having a large bandwidth. The noise of aeroplanes, for example, is a source of sound which is very well suited for analysis using the method and apparatus of the present invention.

Using more apparatus as described, the distance of the sources can be determined.

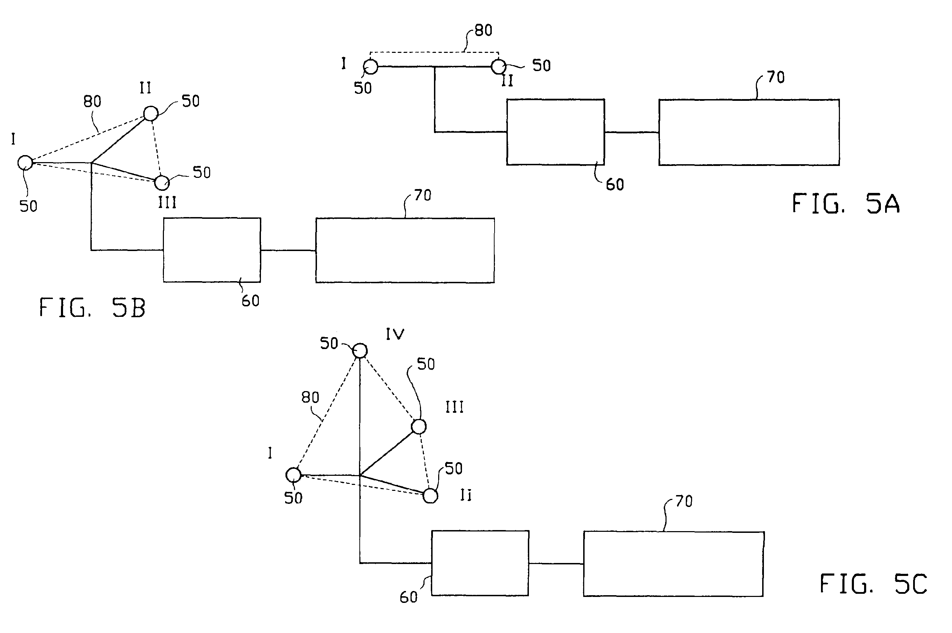

The specific embodiments for measuring sound properties are further elucidated in the additional figures 5-8 described below.

In figures 5A-5C schematic diagrams are presented of the set-up for measuring sound properties using two, three and four phones.

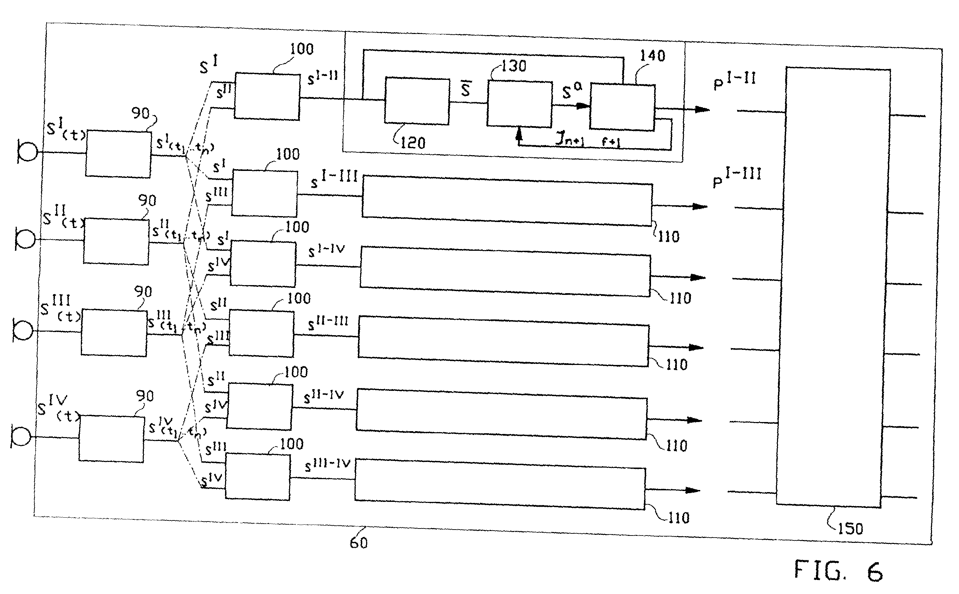

In figure 6 a more detailed diagram is shown according to elucidating component 60 of figures 5A, B and C.

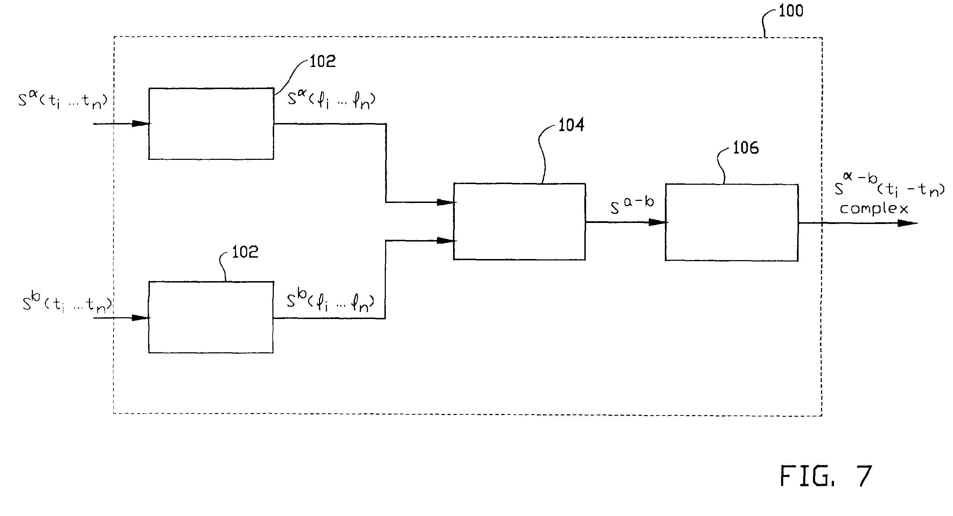

In figure 7 a more detailed scheme is presented of part 100 of figure 6.

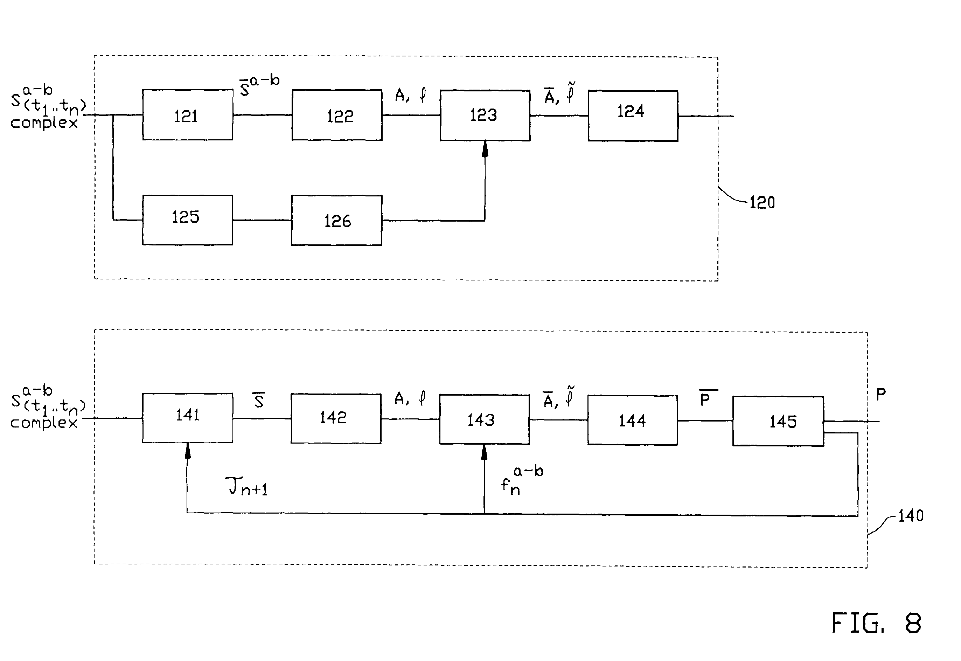

In figure 8 a more detailed flow chart is presented of part 120 and 140 of figure 6.

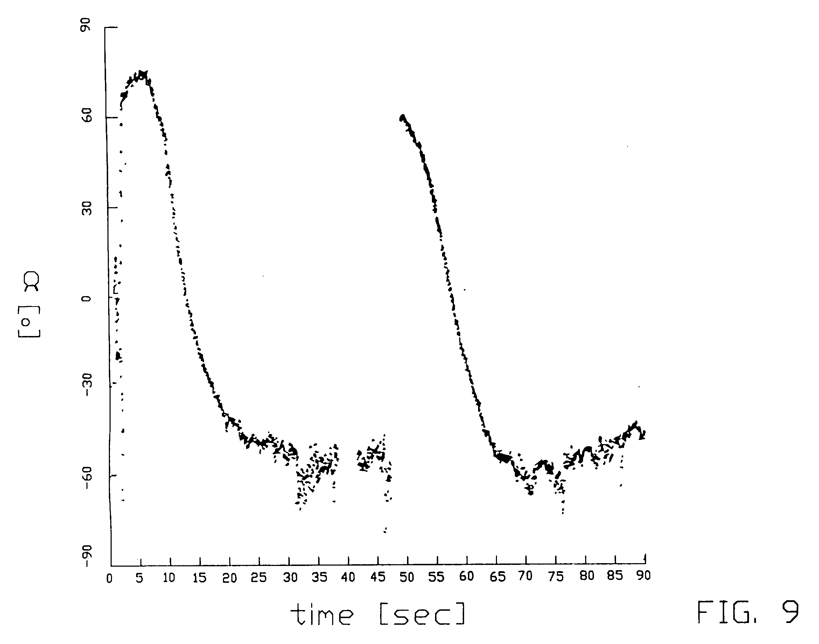

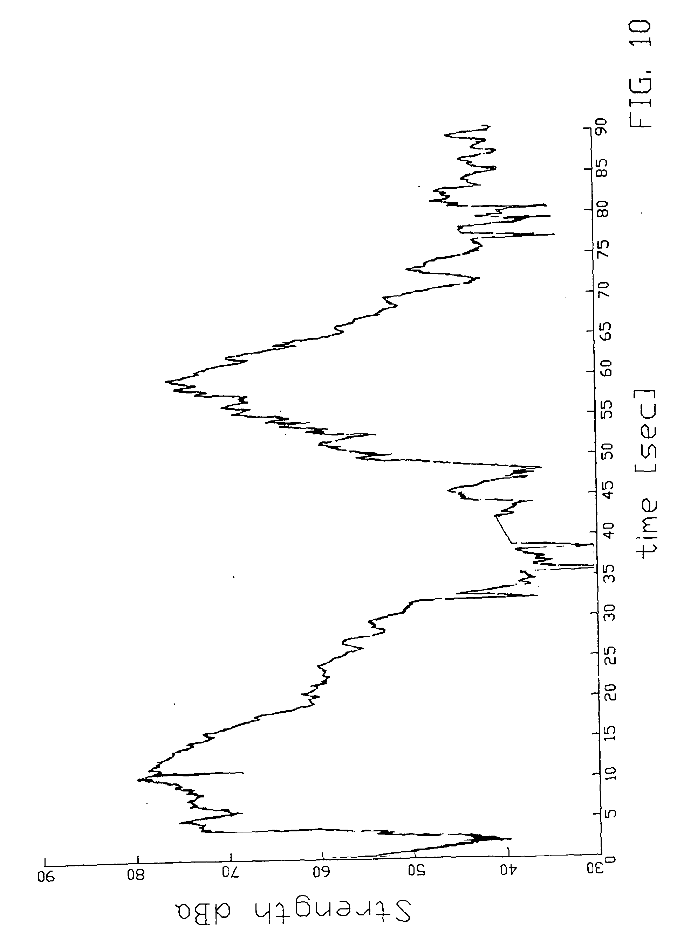

In figure 9 and 10 an example of measurements of moving sound producing objects is presented.

In figure 5A a set-up using two phones 50 is shown. The signals from the phones are directed to a data processor 60. Furthermore, parameters about the environment such as temperature of the air and humidity are fed from 70 into the data processor. Using two phones 50, information about the direction of the sources can be calculated. From these parameters other parameters such as the total amount of sound energy the source emits, etc. can be calculated. The distance 80 between the two phones 50 preferrably is about 20 cm to 2 meter. The actual distance has to be accurately known.

In figure 5B the same set-up as in figure 5A is presented when using three phones 50. Using three phones 50 in, for example, a triangular setting with more or less equal distances between the phones 50, information can be obtained about the direction, but no information disclosing at which side of the plane defined by the three phones 50 a source is located.

In figure 5C the same set-up as in figures 5A and 5B is presented when using four phones 50. Using four phones 50 in, for example, a tetrahedron configuration with about the same distance 80 between each microphone, the direction of a source can be calculated. From this information, other parameters can be calculated.

In figure 6 the data processor 60 of figures 5A-5C is elucidated, for four phones. The electric signals S enter the data processor 60 at circuitry 90 comprising a pre-amplifier and ADC. The four digital signals are input into six correlators 100 where each signal is correlated with the other signals. Thus, four input signals result in 6 correlated signals. These correlated signals each input a separate source detector/tracker circuitry 110. There, the arrival time and the time difference between each phone are calculated using source detector/tracker 110. Each of the six correlated signals enters averager 120, which is connected to the input of detector/tracker 130. The output of detector/tracker 130 is connected to tracking filter 140. The input of the source detector/tracker is also connected to the input of tracking filter 140. The output from the tracking filter 140 is looped back to the input of detector/tracker 130.

The six signals output from the six source detector/tracker circuits are input into one coincidence filter 150. From the coincidence filter 150 several parameters 160 are obtained such as the sound level (dB) of the source, the sound level (dB) of the environment, the spectrum of the sound of the source, the spectrum of the sound of the environment and the direction of the source with respect to the detectors.

In figure 7 the circuitry of the correlator 100 is elucidated. Two signals from different phones enter real Fast Fourier Transforming (FFT) means 102. The two Fourier transformed signals are subsequently input into a correlator 104 where the two signals are combined. The output side of the correlator 104 is connected to the input side of a FFT means where the complex inverse FFT of the input signal is calculated. Thus, the signal is converted into a complex signal.

In figure 8 the averager 120 and the tracking filter 140 of figure 6 are further elucidated. The correlated signal from correlator 100 is input in averager 120. The input is connected to averager 121 and envelope averager 125. The averager 121 is connected to a converter, which converts the complex signal into an amplitude signal and a phase signal. The phase data and amplitude information is input in a phase unwrapper 123. The envelope averager 125 is further connected to peak detector 126 which is connected to phase unwrapper 123. The phase unwrapper 123 is connected to least squares estimator 124.

The correlated signal from correlator 100 and the output from detector/tracker 130 are input to tracking filter 140. The input of tracking filter 140 is input in tracking filter 141, the output of tracking filter 141 is input in converter 142 which converts the complex signal into an amplitude signal and a phase signal. The phase and amplitude data from converter 142 are input to phase unwrapper 143. The unwrapped phase data and amplitude history is input to least squares estimator 144 where time delay, frequency and strength are calculated. The result from least squares estimator 144 is input to sources motion analyser 145. The output from the source motion analyser is also coupled back to tracking filter 141 and unwrapper 143.

In figure 9, a three dimensional plot is presented of measurements of two moving objects, i.e. two twin-engined jets. The y-axis represents the angle in the horizontal plane with regard to the measuring system. From the plot it is clear that the position of the jets can be followed very accurately.

In figure 10, a plot is presented showing the intensity of the sound of the moving objects of figure 9 as function of time. The second source in the time interval 50-70 s is a Learjet. The plot shows that using the measuring system according to the invention for measuring sound properties, the sound intensity of moving objects can be recorded very accurately, as the direction of the objects with regard to the measuring system can be accurately determined.

## Claims

1. Method for extracting at least one physical parameter from at least one first acoustic signal, where the signal is received by at least one first transducer which is located below a water surface, the signal is converted into an electric signal, and the electric signal is applied to a signal processor, in which signal processor the electric signal is converted by an analog-to-digital converter into at least one first digital signal, **characterised in that** the digital signal is transformed into a complex digital signal, and physical parameters are determined on the basis of a phase history and an amplitude history of the complex digital signal.

2. Method according to claim 1, **characterised in that** the digital signal is transformed into a complex digital signal by a Hilbert filter.

3. Method of claim 1 or 2, **characterised in that** the signal processor transforms the complex digital signal into a digital amplitude signal and a corresponding digital phase signal.

4. Method according to any of the preceding claims, **characterised in that** the digital signal processor comprises an amplitude memory, in which a filtered digital amplitude signal as obtained from previous measurements is stored, and that every time a new filtered digital amplitude signal is determined from the digital amplitude signal and from the stored filtered digital amplitude signal.

5. Method according to claim 4, **characterised in that** the digital signal processor comprises a frequency memory, in which an estimated average frequency of the signal, obtained from previously obtained digital phase signals, is stored.

6. Method according to claim 5, **characterised in that** using the weighted least squares method a phase history is estimated from the estimated frequency and from the digital phase signal.

7. Method according to claim 6, **characterised in that** the filtered digital amplitude signal supplies the weighting factors.

8. Method according to claim 7, **characterised in that** the physical parameter is determined based on a zero crossing in the estimated phase history that is closest to a maximum in the filtered digital amplitude signal.

9. Method according to any of the preceding claims, **characterised in that** a crosstalk signal not comprising a physical parameter to be measured is subtracted from the signal, digital signal or complex digital signal before the complex digital signal is further processed.

10. Method according to claim 8, **characterised in that** the second complex digital signal is obtained from averaging complex digital signals.

11. Method according to any of the preceding claims, **characterised in that** at least one second transducer is used for sending a signal which can be received by at least one first transducer.

12. Method according to claim 11, **characterised in that** a second transducer is located below a water surface.

13. Method according to any of the preceding claims, **characterised in that** physical parameters of static objects located below a water surface are measured.

14. Method according to any of the preceding claims, **characterised in that** differences in acoustic impedance below a water surface are determined.

15. Method according to any of the preceding claims , **characterised in that** from the differences in acoustic impedance the structure, thickness and density of sediment layers and packings, sizes and areas of objects, surface texture of objects and thickness of layers below a water surface are measured.

16. Method according to any of the preceding claims, **characterised in that** the position and presence of rocks on, in, and under sediment layers is determined.

17. Use of the method according to any of the preceding claims 1-16 for determining the depth of pipelines or cables in a bed and/or the thickness of layers covering pipelines or cables.

18. Apparatus for extracting at least one physical parameter from an acoustic signal, comprising at least one receiver means located below a water surface for converting the signal into an electric signal, a signal processor and a digital signal processor, connected to the receiver means and provided with an analog-to-digital converter, **characterised in that** the digital signal processor is provided with a means for deriving a first complex digital signal, a converter means connected to the means for deriving a first complex digital signal for converting the complex digital signal into an amplitude signal and a phase signal, an amplitude memory connected to the converter means for storing the amplitude signal and a phase memory means for storing the phase signal.

19. Apparatus according to claim 18, **characterised in that** means for deriving a first complex digital signal comprises a Hilbert filter.

20. Apparatus according to claim 18 or 19, **characterised in that** the digital signal processor is arranged for converting a first complex digital signal into a digital amplitude signal and a corresponding digital phase signal.

21. Apparatus according to claim 20, **characterised in that** the digital signal processor is provided with an amplitude memory, for storing a filtered digital amplitude signal, derived from previous measurements, and a frequency memory, for storing an estimated average frequency, derived from digital phase signals from previous measurements.

22. Apparatus according to claim 21, **characterised in that** the digital signal processor is provided with filter means for deriving a new filtered digital amplitude signal from a digital amplitude signal and a filtered digital amplitude signal stored in the amplitude memory and for deriving a new average frequency of the received signal from a digital phase signal and from an average frequency stored in the frequency memory.

23. Apparatus according to claim 22, **characterised in that** the digital signal processor is provided with weighting means, for estimating a phase history using a weighted least square method, from the estimated frequency of the signal and the series of phase estimations, where the filtered digital amplitude signal provides the weighting factors.

24. Apparatus according to any of the preceding claims 18-23, **characterised in that** the digital signal processor is arranged for deriving physical parameters from the signal from the phase history.

25. Apparatus according to any of the preceding claims 18-24, **characterised in that** the digital signal processor is moreover provided with a crosstalk memory for storing a crosstalk representing second complex digital signal, derived from received complex digital signals, and with a subtractor, for subtracting the second complex digital signal from a first complex digital signal before this first complex digital signal is further processed.

26. Apparatus according to any of the preceding claims 18-25, **characterised in that** the apparatus further comprises at least one second transducer.

27. Vehicle with means for propagation or movement equipped for measuring physical parameters of objects below a water surface comprising an apparatus according to any one of the preceding claims 18-26.

28. Dredger having an apparatus according to any one of the preceding claims 18-26.

29. Data carrier loaded with software for performing the method or used in the apparatus according to any one the preceding claims, wherein the software comprises the steps of
- converting digital signals into complex digital signals,
- converting the complex digital signals into digital phase signals and digital amplitude signals,
- storing the digital phase signals into phase memory means,
- storing the digital amplitude signals into amplitude memory means,
- finding a first estimate of the maximum amplitude of the current amplitude signal using previous amplitude data,
- linearising the digital phase data as function of the associated time base using the first estimate of the maximum amplitude,
- calculating the tangent and abscissa of the phase data as a function of the associated a basis.
- calculating a physical parameter using the tangent, the absicissa and a previously calculated physical parameter.
